# EUROPÄISCHE PATENTSCHRIFT

(11) **EP 1 294 593 B1**
(45) Veröffentlichungstag und Bekanntmachung des Hinweises auf die Patenterteilung: **04.05.2005**
(21) Anmeldenummer: 01945290.3
(22) Anmeldetag: 21.06.2001
(51) Int. Cl.: B60R 21/28

(54) **KALTGASGENERATOR**
COLD GAS GENERATOR
GENERATEUR DE GAZ FROID

(30) Priorität: 29.06.2000 DE 10031751
(43) Veröffentlichungstag der Anmeldung: 26.03.2003
(73) Patentinhaber: Welz Industrieprodukte GmbH, 70736 Fellbach (DE)
(72) Erfinder: WELZ, Siegfried, 70736 Fellbach (DE)
(74) Vertreter: Wasmuth, Rolf, Dipl.-Ing.
(86) Internationale Anmeldenummer: PCT/EP2001/006990
(87) Internationale Veröffentlichungsnummer: WO 2002/000478

(56) Entgegenhaltungen:
- EP-A- 0 807 557
- WO-A-99/12775
- US-A- 4 275 901

## Beschreibung

Die Erfindung betrifft einen Kaltgasgenerator für ein Airbagsystem mit den Merkmalen nach dem Oberbegriff des Anspruchs 1.

Bekannte Kaltgasgeneratoren für Airbagsysteme weisen einen Speicher auf, der mit einem Gas unter Druck befüllt ist und wobei das Gas durch eine Auslösevorrichtung bei einem Unfall aus dem Speicher in einen zusammengelegten Airbag geleitet wird. Dieser wird durch das Gas aufgeblasen und dient als Aufprallschutz von Insassen beispielsweise eines Kraftfahrzeuges. Die Auslösevorrichtung wird von einem Steuergerät betätigt, welches einen entsprechenden Impuls abhängig von einer vorgegebenen Stoßbelastung generiert. Der eingeschränkte, zur Verfügung stehende Bauraum in einem Kraftfahrzeug erfordert eine möglichst kleine Ausbildung des Speichers, woraus sich für eine sichere Befüllung eines Airbags im Bedarfsfalle ein hoher Befülldruck des Speichers ergibt. Durch extreme Wärmeeinwirkung und insbesondere im Brandfalle kann in dem Speicher ein Gasdruck entstehen, der über das konstruktiv vorgegebene Maß hinausgeht und zu einer Überlastung des Speichers führen kann.

Aus der gattungsbildenden US 4,275,901 ist ein Kaltgasgenerator mit einem länglichen, etwa zylinderförmigen Speicher bekannt, an dessen einem Ende eine Auslösevorrichtung zur bedarfsweisen Befüllung eines Airbags vorgesehen ist. Am gegenüberliegenden Ende ist der zylindrische Speicher abwechselnd konvex und konkav ähnlich einem Flaschenhals geformt, wobei auf dem Flaschenhals ein Gewinde vorgesehen ist. Auf dem Gewinde ist ein Befüllventil aufgeschraubt und anschließend verschweißt. Im Befüllventil ist ein Schmelzkörper vorgesehen, der im Brandfalle schmelzen und damit einen Strömungskanal freigeben kann, durch den das im Speicher unter hohem Druck bevorratete Gas kontrolliert entweichen soll. Zur Befestigung des kombinierten Befüllund Sicherheitsventils ist eine komplexe geometrische Ausbildung des Speichers in Form eines Flaschenhalses mit entsprechendem fertigungstechnischem Aufwand erforderlich. Das Kombinationsventil mit einer separaten Abdeckkappe, in der eine Strömungsdrossel integriert ist, ist konstruktiv aufwendig. Zur Montage ist zunächst sein Grundkörper auf den Flaschenhals aufzuschrauben und zu verschweißen. Anschließend wird der Speicher mit Gas befüllt und der Befüllkanal ebenfalls verschweißt. Erst abschließend wird dann die Abdeckkappe mit der integrierten Strömungsdrossel montiert. Die Ausbildung des Sicherheitsventils als eine mit einem Schmelzkörper gefüllte Bohrung wirkt nur indirekt als Sicherung gegen einen auftretenden Überdruck. Eine lokale Erwärmung des Speichers an seinem gegenüberliegenden Ende beispielsweise durch einen lokal begrenzten Kabelbrand kann zu einem Überdruck des bevorrateten Gases führen, ohne dass der Schmelzkörper eine entsprechende Temperatur erreicht und den Überdruck freigibt.

Aus der EP 0 807 557 Al ist ein Kaltgasgenerator für ein Airbagsystem bekannt, in dessen Boden ein als Überdruckventil ausgebildetes Sicherheitsventil angeordnet ist. Dieses besteht aus einem Verschlußstopfen aus einem schmelzbaren Material, welches durch eine zentrale Öffnung im Boden des Behälters von außen in den Innenraum eingebracht wird. Bei Temperaturen oberhalb von ca. 230° C soll der Verschlußstopfen schmelzen und den Behälterinnenraum druckentlasten. Bei einer Druckerhöhung durch z.B. lokale Erhitzung des Behälters kann der Innendruck jedoch unzulässig hoch ansteigen.

Der Erfindung liegt die Aufgabe zugrunde, einen Kaltgasgenerator mit verringertem Fertigungsaufwand und verbesserter Sicherheit bereitzustellen.

Diese Aufgabe wird durch einen Kaltgasgenerator mit den Merkmalen des Anspruchs 1 gelöst.

Der Boden des Speichers ist konvex gekrümmt ausgebildet und in dessen mittiger Aufnahmeöffnung das Überdruckventil als Sicherheitsventil eingeschweißt. Mit einfachen fertigungstechnischen Mitteln kann der Speicher aus einem Rohrmaterial als Halbzeug gefertigt werden, wobei der Boden des Speichers in einem Umformprozeß konvex nach innen gekrümmt wird. Der Werkzeugaufwand für diese Umformung ist minimal. Durch die etwa mittig verbleibende Öffnung kann der Speicher mit einem Gas befüllt und anschließend durch einen eingeschweißten Deckel verschlossen werden. Durch das Einschweißen des Deckels in die Aufnahmeöffnung ist die Baulänge des Speichers und damit des gesamten Kaltgasgenerators insgesamt klein. Die Befüllung des Speichers durch das Sicherheitsventil ermöglicht eine einfache Konstruktion, wobei das als Überdruckventil ausgebildete Sicherheitsventil die Betriebssicherheit erhöht. Das Überdruckventil umfaßt eine Überdrucköffnung und eine die Überdrucköffnung dichtend abdeckende Berstscheibe. Diese ist so dimensioniert, dass sie dem konstruktiv vorgegebenen Gasdruck standhält, jedoch bei Überschreitung eines definierten Grenzdruckes unabhängig von dessen Ursache zerplatzt, wodurch das Gas durch die Überdrucköffnung kontrolliert entweichen kann. Durch diese Ausbildung ist ein definierter Grenzdruck bei geringem konstruktivem und fertigungstechnischem Aufwand präzise einstellbar. Damit ist eine Überlastung des Speichers sicher vermieden.

Bevorzugt ist die Berstscheibe speicherseits der Überdrucköffnung angeordnet, so dass die Berstscheibe durch den anliegenden Gasdruck am Rand der Überdrucköffnung anliegt. Eine Befestigung der Berstscheibe insbesondere durch eine um die Überdrucköffnung umlaufende gasdichte Schweißnaht braucht deshalb im wesentlichen nur eine dichtende Funktion ausüben, wobei die mechanische Belastung gering ist.

Vorteilhaft ist in der Überdrucköffnung eine Strömungsdrossel insbesondere auf ihrer der Berstscheibe abgewandten Seite vorgesehen. Dadurch kann die Überdrucköffnung und die Berstscheibe entsprechend großflächig ausgebildet sein, was zur einer präzisen Einstellbarkeit des Grenz- oder Berstdruckes führt. Gleichzeitig verhindert die Strömungsdrossel insbesondere bei Helium als Gasfüllung wegen dessen guter Strömungseigenschaften in Verbindung mit dem hohen Fülldruck ein zu schnelles Entweichen im Überdruckfalle. Durch die Anordnung der Strömungsdrossel auf der der Berstscheibe abgewandten Seite der Überdrucköffnung wird die Berstscheibe beim Zerbersten nicht durch die Strömungsdrossel behindert. Vorteilhaft ist dazu die Überdrucköffnung als zylindrische Bohrung mit einem entsprechend großen Durchmesser ausgeführt. Im Grunde dieser Bohrung ist etwa achsgleich dazu eine Drosselbohrung mit einem angepasst kleineren Durchmesser vorgesehen, die die Strömungsdrossel bildet. Durch diese Anordnung kann die Überdrucköffnung gemeinsam mit der Drosselbohrung auf einfache Weise in einem Arbeitsgang gebohrt werden. Die Bohrung mit dem größeren Durchmesser weist dabei zweckmäßig eine Tiefe auf, die mindestens etwa der Hälfte ihres Durchmessers entspricht. Dadurch ist vermieden, dass einzelne Bereiche der geborstenen Berstscheibe im verformten Zustand die Drosselbohrung erreichen und diese unerwünscht abdecken. Der an die Berstscheibe angrenzende Rand der Überdrucköffnung ist zweckmäßig gerundet ausgeführt, so dass sich die Berstscheibe beim Zerbersten mit plastischer Verformung an die Rundung anschmiegen kann. Die Rundung verhindert eine übermäßige Verformung der Berstscheibe und damit ein Abreißen einzelner Stücke, wodurch ein Verstopfen der Überdrucköffnung vermieden ist.

Das Sicherheitsventil ist bevorzugt in einer Verschlussplatte angeordnet, welche durch ihre flächige Bauform einfach herzustellen und in die Aufnahmeöffnung im Boden des Speichers einzuschweißen ist. Die flächige Bauform verringert dabei insgesamt die Baugröße des Speichers. Dabei weist die Verschlussplatte vorteilhaft einen in Richtung des Speichers konisch zulaufenden Montagesitz auf, mit dem die Verschlussplatte an die Ränder der Aufnahmeöffnung bei der Montage zur Anlage gebracht wird. Die konische Bauform des Montagesitzes vereinfacht die exakt justierte Montage und vermeidet dabei ein zu tiefes Hineinrutschen in die Aufnahmeöffnung. Des weiteren ist durch den konischen Montagesitz eine großflächige Anlage an den Rand der Aufnahmeöffnung gegeben, wodurch die verbindende Schweißnaht entsprechend flächig, gering belastet und gasdicht ausgeführt werden kann.

Ein Ausführungsbeispiel ist im folgenden anhand der Zeichnung näher beschrieben. Es zeigen:
- Fig. 1: In einer Übersichtsdarstellung einen Kaltgasgenerator mit einem eingeschweißten, als Sicherheitsventil ausgebildeten Verschluss,
- Fig. 2: in einer vergrößerten Querschnittsdarstellung Einzelheiten vom Sicherheitsventil des Kaltgasgenerators nach Fig. 1.

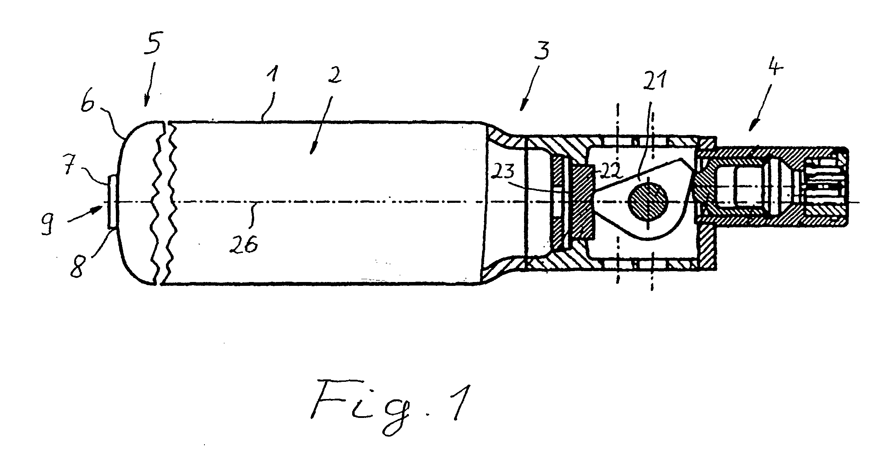

In der übersichtsdarstellung nach Fig. 1 ist ein Kaltgasgenerator für ein Airbagsystem gezeigt, bei dem in einem Speicher 1 ein Gas 2 unter Druck bevorratet ist. Das Gas ist Helium. An einem Ende 3 des etwa zylindrisch ausgebildeten Speichers 1 ist eine Auslösevorrichtung 4 vorgesehen, die bedarfsweise auf einen Stützhebel 21 wirkt. Eine Gasauslassöffnung 25 ist durch eine Dichtscheibe 23 gasdicht verschlossen, wobei die Dichtscheibe 23 über eine zwischengelegte Druckplatte 22 gegen den Stützhebel 21 abgestützt ist. Durch bedarfsweise Betätigung der Auslösevorrichtung 4 wird der Stützhebel 21 seitlich verschwenkt, wobei dessen Stützwirkung auf die Druckplatte 22 und die Dichtscheibe 23 entfällt. Der anliegende Gasdruck zersprengt die Dichtscheibe 23, so dass das Gas 2 in einen nicht dargestellten Airbag strömen kann. Am gegenüberliegenden Ende 5 des Speichers 1 weist dieser einen konvex gekrümmten Boden 6 etwa in Form eines halben Rotationselipsoiden auf. Es kann auch eine halbkugelförmige oder konische Ausbildung des Bodens 6 zweckmäßig sein. Der Boden 6 ist einteilig mit dem Speicher 1 ausgebildet und weist mittig im Bereich der Längsachse 26 eine Aufnahmeöffnung 8 auf. In die Aufnahmeöffnung 8 ist ein als Sicherheitsventil 7 ausgebildeter Verschluss eingeschweißt.

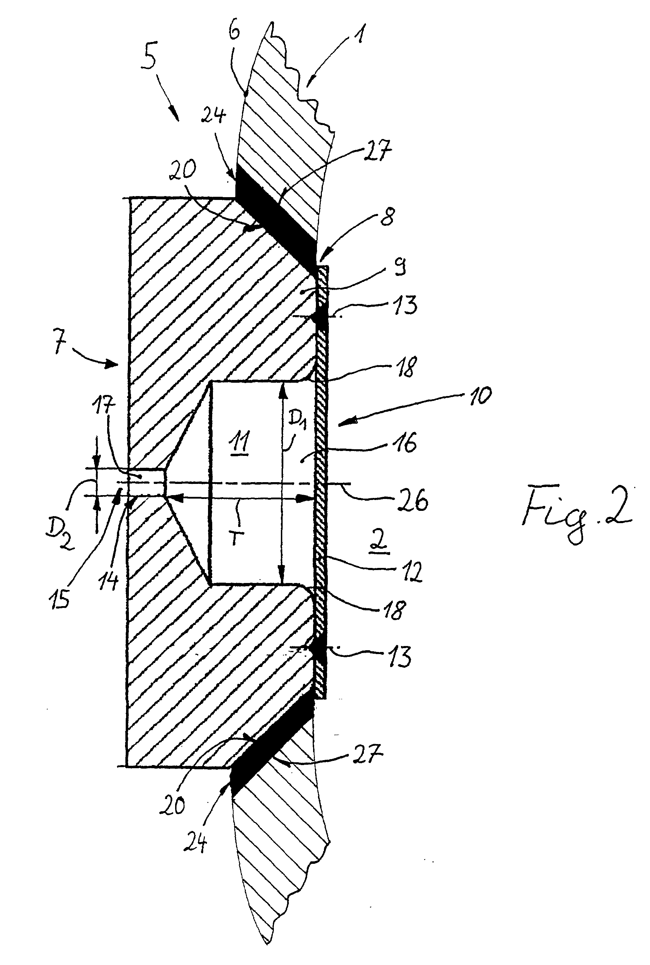

In der vergrößerten Querschnittsdarstellung nach Fig. 2 sind Einzelheiten des Sicherheitsventils 7 und des Bodens 6 des Kaltgasgenerators nach Fig. 1 gezeigt. Der Boden 6 des Speichers 1 weist konzentrisch zur Längsachse 26 eine Aufnahmeöffnung 8 mit einem konischen Rand 27 auf. Das als Überdruckventil 10 ausgebildete Sicherheitsventil 7 ist in die Aufnahmeöffnung 8 mit einer umlaufenden Schweißnaht 24 gasdicht eingeschweißt. Dabei bildet das Sicherheitsventil 7 einen Verschluss 9 für die Aufnahmeöffnung 8. Das Sicherheitsventil 7 ist in einer Verschlussplatte 19 angeordnet, welchen einen in Richtung des Speichers 1 konisch zulaufenden Montagesitz 20 aufweist. Die Schweißnaht 24 verläuft flächig und gasdicht zwischen dem konischen Montagesitz 20 und dem etwa flächenparallelen konischen Rand 27 der Aufnahmeöffnung 8. Eine etwa achsgleich zur Längsachse 26 verlaufende Bohrung 16 bildet eine Überdrucköffnung 11 und ist auf der Seite des bevorrateten Gases 2 durch eine Berstscheibe 12 verschlossen. Die Berstscheibe 12 ist mittels einer umlaufenden Schweißnaht 13 an der Verschlussplatte 19 festgelegt. Im Grunde der Bohrung 16 ist achsgleich dazu eine Drosselbohrung 17 auf der der Berstscheibe 12 der abgewandten Seite 15 der Überdrucköffnung 11 angeordnet. Die Drosselbohrung 17 bildet eine Strömungsdrossel 14 für das im Überdruckfalle ausströmende Gas 2. Die Drosselbohrung 17 wiest einen Durchmesser D2 auf, der signifikant kleiner ist als der Durchmesser D1 der Bohrung 16. Die Bohrung 16 ist mit einer Tiefe T ausgeführt, die größer als die Hälfte ihres Durchmessers D1 ist. Der an der Berstscheibe 12 angrenzende umlaufende Rand 18 der Bohrung 16 ist gerundet ausgeführt.

## Patentansprüche

1. Kaltgasgenerator für ein Airbagsystem mit einem Speicher (1), der mit einem Gas (2) unter Druck befüllt ist, der an einem Ende (3) des Speichers (1) eine Auslösevorrichtung (4) zur bedarfsweisen Einleitung des Gases (2) in einen Airbag aufweist und der an seinem gegenüberliegenden Ende (5) durch einen Boden (6) verschlossen ist, wobei etwa mittig im Boden (6) eine Aufnahmeöffnung (8) vorgesehen ist, in der als Verschluß (9) der Aufnahmeöffnung (8) ein als Überdruckventil (10) ausgebildetes Sicherheitsventil (7) eingeschweißt ist,
**dadurch gekennzeichnet,**
**daß** der Boden (6) des Speichers (1) konvex gekrümmt ist und das Überdruckventil (10) eine Überdrucköffnung (11) und eine die Überdrucköffnung (11) dichtend abdeckende Berstscheibe (12) umfaßt.

2. Kaltgasgenerator nach Anspruch 1,
**dadurch gekennzeichnet, daß** die Berstscheibe (5) speicherseits der Überdrucköffnung (11) angeordnet ist.

3. Kaltgasgenerator nach Anspruch 1 oder 2,
**dadurch gekennzeichnet,**
**daß** die Berstscheibe (12) mittels einer um die Überdrucköffnung (11) umlaufenden gasdichten Schweißnaht (13) gehalten ist.

4. Kaltgasgenerator nach einem der Ansprüche 1 bis 3,
**dadurch gekennzeichnet, daß** in der Überdrucköffnung (11) eine Strömungsdrossel (14) vorgesehen ist.

5. Kaltgasgenerator nach Anspruch 4,
**dadurch gekennzeichnet, daß** die Strömungsdrossel (14), an der der Berstscheibe (12) abgewandten Seite (15) der Überdrucköffnung (11) angeordnet ist.

6. Kaltgasgenerator nach Anspruch 5,
**dadurch gekennzeichnet, daß** die Überdrucköffnung (11) als zylindrische Bohrung (16) mit einem größeren Durchmesser (D1) ausgeführt ist, in deren Grund etwa achsgleich dazu eine die Strömungsdrossel (14) bildende Drosselbohrung (17) mit einem kleineren Durchmesser (D2) vorgesehen ist.

7. Kaltgasgenerator nach Anspruch 6,
**dadurch gekennzeichnet, daß** die Tiefe (T) der zylindrischen Bohrung (16) mindestens etwa der Hälfte ihres Durchmessers (D1) entspricht.

8. Kaltgasgenerator nach einem der Ansprüche 1 bis 7,
**dadurch gekennzeichnet, daß** der an die Berstscheibe (12) angrenzende Rand (18) der Überdrucköffnung (11) gerundet ausgeführt ist.

9. Kaltgasgenerator nach einem der Ansprüche 1 bis 8,
**dadurch gekennzeichnet, daß** das Sicherheitsventil (7) in einer Verschlußplatte (19) angeordnet ist.

10. Kaltgasgenerator nach Anspruch 9,
**dadurch gekennzeichnet, daß** die Verschlußplatte (19) einen in Richtung des Speichers (1) konisch zulaufenden Montagesitz (20) aufweist.

## Claims

1. Cold gas generator for an airbag system comprising a reservoir (1) filled with pressurised gas (2), which is provided at one end (3) of the reservoir (4) with a triggering device (4) to introduce the gas (2) into an airbag when required, and which is closed at the opposite end (5) by a base (6), with an opening (8) located approximately in the centre of the base (6), into which a safety valve (7) designed as a relief valve (10) is welded as a plug (9) for the opening (8),
**characterised in that**
the base (6) of the reservoir (1) has a convex curvature and **in that** the relief valve (10) includes a relief port (11) and a rupture disc (12) covering the relief port (11) while forming a seal.

2. Cold gas generator according to claim 1,
**characterised in that**
the rupture disk (5) is located on the reservoir side of the relief port (11).

3. Cold gas generator according to claim 1 or 2,
**characterised in that**
the rupture disk (12) is retained by means of a gas-tight weld (13) running around the relief port (11).

4. Cold gas generator according to any of claims 1 to 3,
**characterised in that**
a flow restrictor (14) is provided in the relief port (11).

5. Cold gas generator according to claim 4,
**characterised in that**
the flow restrictor (14) is located on the side (15) of the relief port (11) which is remote from the rupture disc (12).

6. Cold gas Generator according to claim 5,
**characterised in that**
the relief port (11) is designed as a cylindrical bore (16) with a larger diameter (D1), at the base of which is provided an approximately coaxial restrictor bore (17) representing the flow restrictor (14) with a smaller diameter (D2).

7. Cold gas generator according to claim 6,
**characterised in that**
the depth (T) of the cylindrical bore (16) is at least equal to approximately half of its diameter (D1).

8. Cold gas generator according to any of claims 1 to 7,
**characterised in that**
the edge (18) of the relief port (11) which adjoins the rupture disc (12) is rounded.

9. Cold gas generator according to any of claims 1 to 8,
**characterised in that**
the safety valve (7) is located in a sealing plate (19).

10. Cold gas generator according to claim 9,
**characterised in that**
the sealing plate ( 19) has a mounting (20) tapering towards the reservoir (1).

## Revendications

1. Générateur de gaz froid pour un système d'airbags comprenant un accumulateur (1) qui est rempli d'un gaz (2) sous pression, lequel générateur de gaz froid, au niveau d'une extrémité (3) de l'accumulateur (1), présente un dispositif de déclenchement (4) servant, en cas de besoin, à l'introduction du gaz (2) dans un airbag et qui, au niveau de son extrémité opposée (5), est obturé par un fond (6) où il est prévu, à peu près au milieu du fond (6), une ouverture de positionnement (8) dans laquelle est soudée une soupape de sécurité (7) conçue comme une soupape de surpression (10) et servant de fermeture (9) de l'ouverture de positionnement (8),
**caractérisé**
**en ce que** le fond (6) de l'accumulateur (1) est courbe de façon convexe, et la soupape de surpression (10) comprend un orifice de surpression (11) et un disque de rupture (12) recouvrant de façon étanche l'orifice de surpression (11).

2. Générateur de gaz froid selon la revendication 1, **caractérisé en ce que** le disque de rupture (12) est disposé côté orifice de surpression (11) de l'accumulateur.

3. Générateur de gaz froid selon la revendication 1 ou 2, **caractérisé en ce que** le disque de rupture (12) est maintenu au moyen d'un cordon de soudure (13) étanche au gaz et placé de façon circulaire tout autour de l'orifice de surpression (11).

4. Générateur de gaz froid selon l'une quelconque des revendications 1 à 3, **caractérisé en ce qu'**un étranglement d'écoulement (14) est prévu dans l'orifice de surpression (11).

5. Générateur de gaz froid selon la revendication 4, **caractérisé en ce que** l'étranglement d'écoulement (14) est disposé sur le côté (15) de l'orifice de surpression (11) placé à l'opposé du disque de rupture (12).

6. Générateur de gaz froid selon la revendication 5, **caractérisé en ce que** l'orifice de surpression (11) est réalisé comme un perçage cylindrique (16) ayant un plus grand diamètre (D1), perçage cylindrique dans le fond duquel il est prévu, à peu près sur le même axe que ce perçage, un perçage d'étranglement (17) formant l'étranglement d'écoulement (14) et ayant un plus petit diamètre (D2).

7. Générateur de gaz froid selon la revendication 6, **caractérisé en ce que** la profondeur (T) du perçage cylindrique (16) correspond au moins à peu près à la moitié de son diamètre (D1).

8. Générateur de gaz froid selon l'une quelconque des revendications 1 à 7, **caractérisé en ce que** le bord (18) de l'orifice de surpression (11) contigu au disque de rupture (12) est réalisé de façon arrondie.

9. Générateur de gaz froid selon l'une quelconque des revendications 1 à 8, **caractérisé en ce que** la soupape de sécurité (7) est disposée dans une plaque d'obturation (19).

10. Générateur de gaz froid selon la revendication 9, **caractérisé en ce que** la plaque d'obturation (19) présente un logement de montage (20) se profilant de façon conique en direction de l'accumulateur (1).
